# FASCICULE DE BREVET EUROPEEN

(11) **EP 3 578 405 B1**
(45) Date de publication et mention de la délivrance du brevet: **28.07.2021**
(21) Numéro de dépôt: 19178125.1
(22) Date de dépôt: 04.06.2019
(51) Int. Cl.: B60K 17/00, B60K 17/04, B60K 17/22, B60K 17/24, B61C 9/08, B61C 9/12, B61C 9/38, B61C 9/44, B61C 9/48

(54) **ENSEMBLE DE TRANSMISSION D'UN COUPLE EN SORTIE D'UN MOTEUR VERS UN RÉDUCTEUR ET PROCÉDÉ DE FABRICATION ASSOCIÉ**
ÜBERTRAGUNGSANORDNUNG EINES AUSGANGSDREHMOMENTS EINES MOTORS ZU EINEM UNTERSETZUNGSGETRIEBE, UND ENTSPRECHENDES HERSTELLUNGSVERFAHREN
ASSEMBLY FOR TRANSMITTING AN OUTPUT TORQUE FROM AN ENGINE TO A REDUCTION GEAR AND ASSOCIATED MANUFACTURING METHOD

(30) Priorité: 04.06.2018 FR 1854832
(43) Date de publication de la demande: 11.12.2019
(73) Titulaire: ALSTOM Transport Technologies, 93400 Saint-Ouen (FR)
(72) Inventeur: BENAIS, Cyrille, 71670 Saint Firmin (FR); RODET, Alain, 71100 CHALON SUR SAÔNE (FR); FAURE, Ludovic, 71250 SALORNAY SUR GUYE (FR); ANTUNES, Louis-Manuel, 71490 SAINT JEAN DE TREZY (FR)
(74) Mandataire: Lavoix

(56) Documents cités:
- EP-A1- 2 258 596
- EP-A1- 2 883 773
- WO-A1-2013/020780
- US-A- 5 807 180
- US-A1- 2017 343 049

## Description

La présente invention concerne un ensemble de transmission d'un couple en sortie d'un moteur vers un réducteur.

L'invention concerne également un procédé de fabrication d'un tel ensemble de transmission.

L'ensemble de transmission selon l'invention est notamment destiné à l'entraînement d'un véhicule ferroviaire. Un véhicule ferroviaire comporte notamment un bogie motorisé comprenant deux paires de roues, les roues d'une paire étant reliées l'une à l'autre par un arbre pour former un essieu, lesdits essieux étant reliés l'un à l'autre par un châssis. Un moteur fixé au châssis entraîne la rotation dudit essieu par l'intermédiaire d'un ensemble de transmission et d'un réducteur.

L'ensemble de transmission assure la transmission du couple moteur du moteur à l'essieu, et la transmission du couple de freinage de l'essieu au moteur, tout en permettant les mouvements relatifs entre le moteur et l'essieu induits par des suspensions primaires.

Dans l'entraînement dit « à arbre creux », le réducteur et le moteur sont liés rigidement et fixés au châssis de bogie. Les couples sont transmis entre le palier de sortie du réducteur et l'essieu par un dispositif à moyeu creux, qui assure aussi les débattements dus aux mouvements entre le châssis de bogie et l'essieu.

Il est ainsi connu dans l'art antérieur d'utiliser un ensemble de transmission comportant un arbre muni à sa périphérie d'une denture coopérant avec une denture complémentaire s'étendant à l'intérieur d'un manchon d'accouplement. Ce manchon est fixé au moyen de vis sur un moyeu creux définissant un logement central, l'arbre étant reçu dans ce logement central, un débattement entre l'arbre et le logement étant permis. Le moyeu creux comporte une surface externe sur une partie de laquelle s'étend une denture périphérique sur laquelle s'engrène une roue du réducteur. Il est ainsi possible de transmettre un couple en sortie d'un moteur vers un réducteur.

Un tel ensemble de transmission ne donne cependant pas entière satisfaction. En effet, il augmente l'encombrement du bogie et diminue donc l'espace disponible pour loger le moteur.

Les documents US 2017/343049, EP 2 883 773 et EP 2 258 596 décrivent des ensembles de transmission comprenant un moyeu creux comportant une surface externe, un logement central et une denture interne sur la périphérie d'une partie du logement central, et un arbre comportant une denture en saillie complémentaire de la denture interne du moyeu, l'arbre étant reçu à l'intérieur du logement central, de sorte que la denture de l'arbre coopère avec la denture interne du moyeu.

Un des buts de l'invention est de pallier à cet inconvénient en proposant un ensemble de transmission présentant un encombrement axial réduit tout en étant facile à produire.

L'invention a pour objet un ensemble de transmission selon la revendication 1.

Le moyeu creux réalisé en une seule pièce permet de réduire l'encombrement axial de l'ensemble de transmission.

L'ensemble de transmission selon l'invention peut comprendre l'une ou plusieurs des caractéristiques des revendications 2 à 6, prise(s) isolément ou suivant toute combinaison techniquement possible.

L'invention a également pour objet un procédé de fabrication selon la revendication 7.

Le procédé de fabrication est par exemple selon la revendication 8.

L'invention sera mieux comprise à la lecture de la description qui va suivre, donnée uniquement à titre d'exemple, et faite en se référant aux dessins annexés, sur lesquels :
- la figure 1 est une vue en coupe d'un ensemble de transmission selon l'invention reliant la sortie d'un moteur à un réducteur (non représenté ici) ;
- la figure 2 est une vue en coupe de la partie de l'ensemble de transmission de la figure 1 côté réducteur.

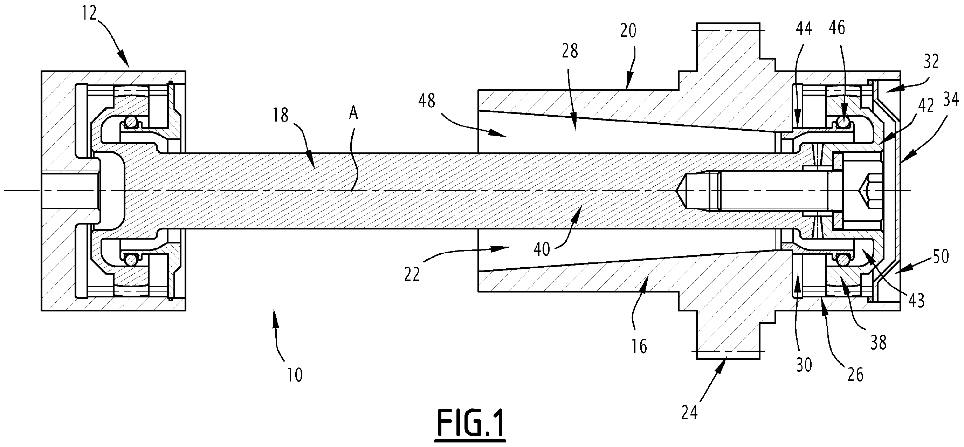

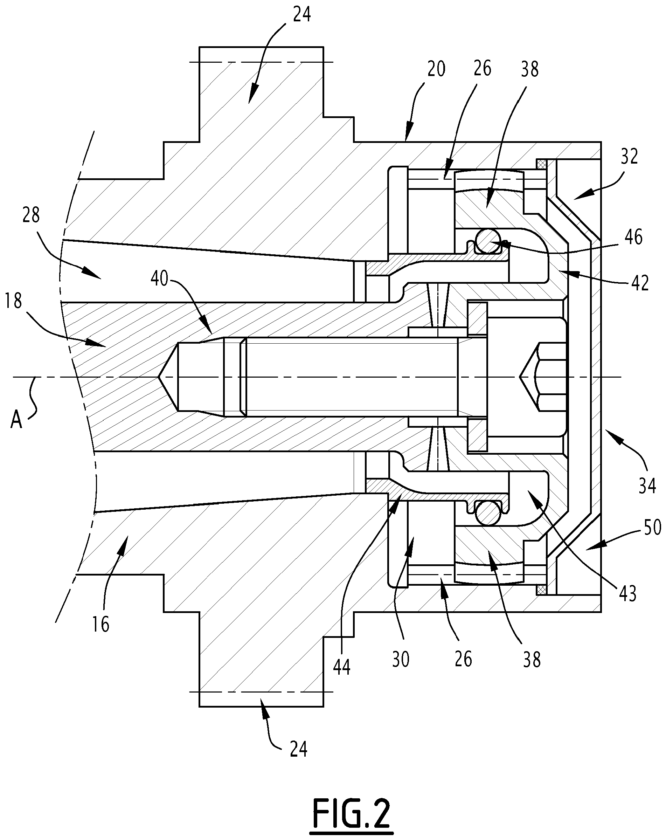

Un ensemble de transmission 10 selon l'invention est représenté schématiquement sur les figures 1 et 2.

L'ensemble de transmission 10 est destiné à transmettre un couple généré à la sortie d'un moteur 12 vers un réducteur (non représenté ici). Comme connu en soi, le réducteur transmet le mouvement de rotation du moteur à au moins une roue et permet d'ajuster le rapport de transmission en l'arbre du moteur et la roue. Dans cet exemple, l'ensemble de transmission 10 est destiné à être monté sur un bogie d'un véhicule ferroviaire.

Un premier mode de réalisation de l'ensemble de transmission selon l'invention va maintenant être décrit.

L'ensemble de transmission 10 comporte un moyeu 16 creux et un arbre 18.

Selon un mode de réalisation particulier, le moyeu 16 et l'arbre 18 s'étendent selon un même axe central A.

Le moyeu 16 creux est réalisé en une seule pièce, c'est-à-dire qu'il ne comprend pas plusieurs parties assemblées entre elles par des moyens de fixation.

Le moyeu 16 creux comporte une surface externe 20 cylindrique, tournée vers l'extérieur de l'ensemble de transmission 10, et un logement central 22 s'étendant à l'intérieur du moyeu autour de l'axe central A.

Le moyeu 16 creux comporte une denture externe 24 s'étendant sur la périphérie d'une partie de la surface externe 20, autour de la surface externe 20.

Selon un mode de réalisation particulier, une roue du réducteur (non représentée ici) s'engraine sur la denture externe 24 du moyeu 16. De la sorte, la rotation de moyeu creux autour de son axe central entraine la mise en mouvement de la roue du réducteur.

Le moyeu 16 comporte une denture interne 26 s'étendant sur la périphérie d'une partie du logement central 22.

Selon un mode de réalisation particulier, la denture interne 26 est plus éloignée de la sortie du moteur 12 que la denture externe 24 selon la direction de l'axe A.

Le logement central 22 comporte une première partie 28 et une deuxième partie 30.

Par exemple, la première partie 28 du logement 22 est de forme sensiblement cylindrique de diamètre constant.

Alternativement et comme représenté sur les figures, la première partie 28 peut être de forme tronconique et présenter un diamètre minimal du côté de la deuxième partie 30 et un diamètre maximal du côté de la sortie du moteur 12, le diamètre croissant de façon linéaire entre le diamètre minimal et le diamètre maximal.

Avantageusement, la deuxième partie 30 forme un cylindre de révolution.

Le diamètre de la première partie 28 du logement central 22 est inférieur au diamètre de la deuxième partie 30 du logement central 22. Selon un mode de réalisation particulier, le diamètre minimal de la première partie 28 du logement central 22 est inférieur au diamètre de la deuxième partie 30 du logement central 22. Ainsi, le logement central 22 comprend un étranglement au niveau de la transition entre la première partie 28 et la deuxième partie 30.

La denture interne 26 s'étend sur la périphérie de la deuxième partie 30 du logement central 22.

Le logement central 22 comporte en outre une partie extrême axiale 32 située du côté opposé au moteur. Cette partie extrême axiale 32 est par exemple fermée par un capot 34.

L'arbre 18 est reçu à l'intérieur du logement central 22. Avantageusement, l'arbre 18 présente un débattement axial à l'intérieur du logement central 22 selon l'axe central A pour autoriser les débattements relatifs entre le moteur et le réducteur selon l'axe central A.

L'arbre 18 comporte une denture 38 en saillie sur sa périphérie. La denture 38 de l'arbre 18 est complémentaire de la denture interne 26 du moyeu 16, de sorte que la denture 38 de l'arbre 18 coopère avec la denture interne 26 du moyeu 16, lorsque l'arbre 18 est reçu à l'intérieur de logement central 22.

Selon un mode de réalisation particulier, la dimension de la denture 38 de l'arbre 18 mesuré selon l'axe central A présente une longueur inférieure ou égale à celle de la denture interne 26 du moyeu 16. Cette différence de longueur permet d'éviter le décrochage de l'arbre 18 au cours du débattement axial de ce dernier à l'intérieur du logement central 22, c'est-à-dire que la denture de l'arbre 38 coopère toujours avec la denture interne 26 quelle que soit la position axiale de l'arbre 18 par rapport au logement central 22.

L'arbre 18 comporte un corps 40 et une tête 42. Le corps 40 et la tête 42 sont par exemple fixés l'un à l'autre par des éléments de fixation ou par soudage.

La tête 42 présente un diamètre supérieur au diamètre du corps 40 et supérieur au diamètre minimal de la première partie 28 du logement central 22.

Le corps 40 s'étend dans la première partie 28 du logement central 22 et passe par l'étranglement formé dans le logement central. La tête 42 est reçue dans la deuxième partie 30 du logement central 22 et la denture 38 de l'arbre 18 s'étend sur la périphérie d'une partie de ladite tête 42. Ainsi, la tête 42 est retenue dans la deuxième partie 30 par l'étranglement entre la première partie et la deuxième partie d'un côté et par le capot 34 de l'autre côté, ce qui empêche tout sortie de la tête hors de la deuxième partie 30 lors des débattement axiaux de l'arbre.

La tête 42 comporte une rainure annulaire 43 s'étendant autour de l'axe principal A.

L'ensemble de transmission 10 comporte en outre une bague 44 engagée autour de l'arbre 18 et fixée sur le logement central 22. La bague 44 porte un joint 46 qui est en contact avec l'arbre 18.

Selon un mode de réalisation particulier, la bague 44 est reçue en partie à l'intérieur de la rainure annulaire 43, le joint 46 étant en contact avec une des parois définies par la rainure annulaire 43 afin d'assurer une étanchéité entre la première partie 28 du logement 22 et la deuxième partie 30 du logement 22.

Un procédé de fabrication de l'ensemble de transmission 10 selon l'invention va maintenant être décrit.

Un moyeu 16 creux est fabriqué en une seule pièce. Par exemple, le moyeu 16 creux est fabriqué par moulage.

Le moyeu 16 comporte une surface externe 20 et un logement central 22.

Le moyeu 16 comporte une denture externe 24 s'étendant sur la périphérie d'une partie de la surface externe 20.

Le moyeu 16 comporte une denture interne 26 s'étendant sur la périphérie d'une partie du logement central 22.

Un arbre 18 comportant une denture 38 en saillie est fabriqué.

Puis, l'arbre 18 est inséré à l'intérieur du logement central 22 du moyeu 16 creux. La denture 38 de l'arbre 18 est positionnée de sorte qu'elle est conjuguée à la denture interne 26 du moyeu 16. La denture 38 de l'arbre 18 coopère ainsi avec la denture interne 26 du moyeu 16.

Selon un mode de réalisation particulier lesdits corps 40 et tête 42 sont fabriqués séparément de sorte que le corps 40 et la tête 42 ne soient pas fixés l'un à l'autre.

Le corps 40 est inséré dans le logement central 22 du moyeu 16 par une première ouverture 48 du logement central 22 et la tête 42 de l'arbre 18 est insérée dans le logement central 22 par une deuxième ouverture 50 du logement central 22 située au niveau de la partie extrême axiale 32, ce qui permet le montage de l'arbre dans le logement central en bloquant la tête à l'intérieur de la deuxième partie du logement central alors que le moyeu est réalisé d'une seule pièce.

Selon un mode de réalisation particulier, une bague 44 est réalisée. La bague 44 est insérée à l'intérieur du logement 22 et est fixé dessus avant l'insertion de l'arbre 18 à l'intérieur du logement 22.

Selon un mode de réalisation particulier, un capot 34 est placé au niveau de la partie extrême axiale 32, de sorte qu'il ferme la partie extrême axiale 32 du logement central 22.

Selon un mode de réalisation particulier, une roue du réducteur (non représentée ici) s'engraine sur la denture externe 24 du moyeu 16.

L'utilisation d'un moyeu réalisé en une seule pièce et comportant deux dentures permet de réduire l'encombrement axial de l'ensemble de transmission. Il est ainsi possible de réduire cet encombrement d'une vingtaine de millimètres en supprimant l'épaisseur occupée précédemment par l'épaisseur de la paroi du manchon et celle de la tête des vis fixant ledit manchon au moyeu. L'encombrement sur le bogie est significativement réduit.

Le montage de l'ensemble de transmission selon l'invention est simplifié et permet d'obtenir une meilleure concentricité entre le moyeu creux et l'arbre par rapport à un ensemble comprenant en plus un manchon.

De plus, un tel moyeu creux nécessite une logistique et des coûts de production moindres, une seule pièce étant à fournir au lieu de deux.

## Revendications

1. Ensemble de transmission (10) d'un couple en sortie d'un moteur (12) vers un réducteur, l'ensemble (10) comportant :
- un moyeu (16) creux réalisé en une seule pièce, le moyeu (16) comportant une surface externe (20) et un logement central (22), le moyeu (16) présentant une denture interne (26) s'étendant sur la périphérie d'une partie du logement central (22), et
- un arbre (18), l'arbre (18) comportant une denture (38) en saillie complémentaire de la denture interne (26) du moyeu (16) et l'arbre (18) étant reçu à l'intérieur du logement central (22), de sorte que la denture (38) de l'arbre (18) coopère avec la denture interne (26) du moyeu (16),
**caractérisé en ce que** le moyeu (16) présente une denture externe (24) s'étendant sur la périphérie d'une partie de la surface externe (20),
**en ce que** le logement central (22) comporte une première partie (28) et une deuxième partie (30), le diamètre de la première partie (28) étant inférieur au diamètre de la deuxième partie (30) et la denture interne (26) s'étendant sur la périphérie de la deuxième partie (30), et
**en ce que** l'arbre (18) comporte un corps (40) et une tête (42), la tête (42) présentant un diamètre supérieur au diamètre du corps (40), la denture (38) de l'arbre (18) s'étendant sur la périphérie d'une partie de la tête (42), ladite tête (42) étant reçue dans la deuxième partie (30) du logement central (22).

2. Ensemble de transmission (10) selon la revendication 1, dans lequel le moyeu (16) et l'arbre (18) s'étendent selon un axe central (A), un débattement axial de l'arbre (18) à l'intérieur du logement central (22) selon ledit axe central (A) étant autorisé.

3. Ensemble de transmission (10) selon l'une quelconque des revendications 1 ou 2, dans lequel la dimension de la denture (38) de l'arbre (18) mesurée selon l'axe central (A) est inférieure à celle de la denture interne (26) du moyeu (16).

4. Ensemble de transmission (10) selon l'une quelconque des revendications 1 à 3, comportant une bague (44) engagée autour de l'arbre (18) et fixée sur le logement central (22), ladite bague (44) portant un joint (46) en contact avec l'arbre (18).

5. Ensemble de transmission (10) selon l'une quelconque des revendications 1 à 4, dans lequel une partie extrême axiale (32) du logement central (22) est fermée par un capot (34).

6. Ensemble de transmission (10) selon l'une quelconque des revendications 1 à 5, comprenant une roue d'un réducteur s'engrenant sur la denture externe (24) du moyeu (16).

7. Procédé de fabrication d'un ensemble de transmission (10) d'un couple en sortie d'un moteur (12) vers un réducteur selon l'une quelconque des revendications 1 à 6 comprenant les étapes suivantes :
- fourniture d'un moyeu (16) creux réalisé en une seule pièce, le moyeu (16) comportant une surface externe (20) et un logement central (22), le moyeu (16) présentant une denture externe (24) et une denture interne (26), la denture externe (24) s'étendant sur la périphérie d'une partie de la surface externe (20) et la denture interne (26) s'étendant sur la périphérie d'une partie du logement central (22),
- fourniture d'un arbre (18) comportant une denture (38) en saillie complémentaire de la denture interne (26) du moyeu (16), et
- insertion de l'arbre (18) à l'intérieur du logement central (22), la denture (38) de l'arbre (18) étant conjuguée à la denture interne (26) du moyeu (16), de sorte que la denture (38) de l'arbre (18) coopère avec la denture interne (26) du moyeu (16).

8. Procédé de fabrication selon la revendication 7, dans lequel l'insertion de l'arbre (18) dans le logement central (22) du moyeu (16) comprend les étapes suivantes :
- insertion du corps (40) dans le logement central (22) par une première ouverture (48) du logement (22),
- insertion de la tête (42) de l'arbre (18) par la deuxième ouverture (50) du logement (22), et
- fixation de la tête (42) sur le corps (40).

## Patentansprüche

1. Anordnung (10) zur Übertragung eines Ausgangsdrehmoments eines Motors (12) zu einem Getriebe, wobei die Anordnung (10) aufweist:
- eine hohle Nabe (16), die in einem Stück hergestellt ist, wobei die Nabe (16) eine Außenfläche (20) und einen mittleren Aufnahmeraum (22) aufweist, wobei die Nabe (16) eine Innenverzahnung (26) aufweist, die sich um einen Teil des mittleren Aufnahmeraums (22) erstreckt, und
- eine Welle (18), wobei die Welle (18) eine überstehende Verzahnung (38) aufweist, die komplementär zu der Innenverzahnung (26) der Nabe (16) ist, und wobei die Welle (18) im Inneren des mittleren Aufnahmeraums (22) aufgenommen ist, derart dass die Verzahnung (38) der Welle (18) mit der Verzahnung (26) der Nabe (16) zusammenwirkt,
**dadurch gekennzeichnet, dass** die Nabe (16) eine Außenverzahnung (24) aufweist, die sich um den Umfang eines Teils der Außenfläche (20) erstreckt,
dass der mittlere Aufnahmeraum (22) einen ersten Teil (28) und einen zweiten Teil (30) aufweist, wobei der Durchmesser des ersten Teils (28) kleiner ist als der Durchmesser des zweiten Teils (30) und die Innenverzahnung (26) sich um den Umfang des zweiten Teils (30) erstreckt, und
dass die Welle (18) einen Körper (40) und einen Kopf (42) umfasst, wobei der Kopf (42) einen Durchmesser aufweist, der größer ist als der Durchmesser des Körpers (40), wobei sich die Verzahnung (38) der Welle (18) um den Umfang eines Teils des Kopfs (42) erstreckt, wobei der Kopf (42) in dem zweiten Teil (30) des mittleren Aufnahmeraums (22) aufgenommen ist.

2. Übertragungsanordnung (10) nach Anspruch 1, bei der sich die Nabe (16) und die Welle (18) entlang einer Mittelachse (A) erstrecken, wobei eine axiale Auslenkung der Welle (18) innerhalb des mittleren Aufnahmeraums (22) entlang der Mittelachse (A) zulässig ist.

3. Übertragungsanordnung (10) nach einem beliebigen der Ansprüche 1 oder 2, bei der die Abmessung der Verzahnung (38) der Welle (18), gemessen gemäß der Mittelachse (A), kleiner ist als die der Innenverzahnung (26) der Nabe (16).

4. Übertragungsanordnung (10) nach einem beliebigen der Ansprüche 1 bis 3, die einen Ring (44) aufweist, der die Welle (18) umgreift und an dem mittleren Aufnahmeraum (22) befestigt ist, wobei der Ring (44) eine Dichtung (46) trägt, die mit der Welle (18) in Kontakt ist.

5. Übertragungsanordnung (10) nach einem beliebigen der Ansprüche 1 bis 4, bei der ein axialer Endbereich (32) des mittleren Aufnahmeraums (22) durch einen Deckel (34) verschlossen ist.

6. Übertragungsanordnung (10) nach einem beliebigen der Ansprüche 1 bis 5, die ein Zahnrad eines Untersetzungsgetriebes umfasst, das mit der Außenverzahnung (24) der Nabe (16) im Eingriff ist.

7. Verfahren zur Herstellung einer Anordnung (10) zur Übertragung eines Ausgangsdrehmoments eines Motors (12) auf ein Untersetzungsgetriebe nach einem beliebigen der Ansprüche 1 bis 6, die folgenden Schritte umfassend:
- Bereitstellen einer hohlen Nabe (16), die in einem Stück hergestellt ist, wobei die Nabe (16) eine Außenfläche (20) und einen mittleren Aufnahmeraum (22) aufweist, wobei die Nabe (16) eine Außenverzahnung (24) und eine Innenverzahnung (26) aufweist, wobei die Außenverzahnung (24) sich um den Umfang eines Teils der Außenfläche (20) erstreckt und die Innenverzahnung (26) sich um den Umfang eines Teils des mittleren Aufnahmeraums (22) erstreckt,
- Bereitstellen einer Welle (18), die eine überstehenden Verzahnung (38) aufweist, die komplementär zur Innenverzahnung (26) der Nabe (16) ist, und
- Einsetzen der Welle (18) in den mittleren Aufnahmeraum (22), wobei die Verzahnung (38) der Welle (18) mit der Innenverzahnung (26) der Nabe (16) gekoppelt ist, derart dass die Verzahnung (38) der Welle (18) mit der Innenverzahnung (26) der Nabe (16) zusammenwirkt.

8. Herstellungsverfahren nach Anspruch 7, bei dem das Einsetzen der Welle (18) in den mittleren Aufnahmeraum (22) der Nabe (16) die folgenden Schritte umfasst:
- Einsetzen des Körpers (40) in den mittleren Aufnahmeraum (22) durch eine erste Öffnung (48) des Aufnahmeraums (22),
- Einsetzen des Kopfes (42) der Welle (18) durch die zweite Öffnung (50) des Aufnahmeraums (22), und
- Befestigen des Kopfes (42) am Körper (40).

## Claims

1. Transmission assembly (10) for transmitting an output torque of a motor (12) to a reduction gear, the assembly (10) comprising:
- a hollow hub (16) which is formed in one piece, the hub (16) comprising an external surface (20) and a central receiver (22), the hub (16) having an internal toothing (26) extending over the periphery of a portion of the central receiver (22), and
- a shaft (18), the shaft (18) comprising a projecting toothing (38) which is complementary to the internal toothing (26) of the hub (16), and the shaft (18) being received inside the central receiver (22) so that the toothing (38) of the shaft (18) cooperates with the internal toothing (26) of the hub (16),
**characterised in that** the hub (16) has an external toothing (24) which extends over the periphery of a portion of the external surface (20),
**in that** the central receiver (22) comprises a first portion (28) and a second portion (30), the diameter of the first portion (28) being smaller than the diameter of the second portion (30) and the internal toothing (26) extending over the periphery of the second portion (30), and
**in that** the shaft (18) comprises a body (40) and a head (42), the head (42) having a diameter which is larger than the diameter of the body (40), the toothing (38) of the shaft (18) extending over the periphery of a portion of the head (42), said head (42) being received in the second portion (30) of the central receiver (22).

2. Transmission assembly (10) according to claim 1, wherein the hub (16) and the shaft (18) extend along a central axis (A), an axial travel of the shaft (18) inside the central receiver (22) along said central axis (A) being allowed.

3. Transmission assembly (10) according to either claim 1 or claim 2, wherein the size of the toothing (38) of the shaft (18), measured along the central axis (A), is smaller than that of the internal toothing (26) of the hub (16).

4. Transmission assembly (10) according to any one of claims 1 to 3, comprising a ring (44) which is engaged around the shaft (18) and fixed to the central receiver (22), said ring (44) carrying a gasket (46) which is in contact with the shaft (18).

5. Transmission assembly (10) according to any one of claims 1 to 4, wherein an axial end portion (32) of the central receiver (22) is closed by a cap (34).

6. Transmission assembly (10) according to any one of claims 1 to 5, comprising a wheel of a reduction gear meshing with the external toothing (24) of the hub (16).

7. Method for manufacturing a transmission assembly (10) for transmitting an output torque of a motor (12) to a reduction gear according to any one of claims 1 to 6, which method comprises the following steps:
- providing a hollow hub (16) which is formed in one piece, the hub (16) comprising an external surface (20) and a central receiver (22), the hub (16) having an external toothing (24) and an internal toothing (26), the external toothing (24) extending over the periphery of a portion of the external surface (20) and the internal toothing (26) extending over the periphery of a portion of the central receiver (22),
- providing a shaft (18) comprising a projecting toothing (38) which is complementary to the internal toothing (26) of the hub (16), and
- inserting the shaft (18) inside the central receiver (22), the toothing (38) of the shaft (18) mating with the internal toothing (26) of the hub (16) so that the toothing (38) of the shaft (18) cooperates with the internal toothing (26) of the hub (16).

8. Manufacturing method according to claim 7, wherein the insertion of the shaft (18) into the central receiver (22) of the hub (16) comprises the following steps:
- inserting the body (40) into the central receiver (22) through a first opening (48) of the receiver (22),
- inserting the head (42) of the shaft (18) through the second opening (50) of the receiver (22), and
- fixing the head (42) to the body (40).
